(19) Europäisches Patentamt
European Patent Office
Office européen des brevets

(11) EP 3 901 210 B1

(12) EUROPEAN PATENT SPECIFICATION

(45) Date of publication and mention of the grant of the patent:
**16.04.2025 Bulletin 2025/16**

(21) Application number: **19900813.7**

(22) Date of filing: **03.10.2019**

(51) International Patent Classification (IPC):
***C08L 21/00*** *(2006.01)* ***B60C 1/00*** *(2006.01)*
***B60C 11/00*** *(2006.01)*

(52) Cooperative Patent Classification (CPC):
(C-Sets available)
**B60C 1/0016; B60C 11/0304; C08L 7/00; C08L 9/00;** B60C 11/033; B60C 2011/0016; B60C 2011/0025; Y02T 10/86 (Cont.)

(86) International application number:
**PCT/JP2019/039124**

(87) International publication number:
**WO 2020/129356 (25.06.2020 Gazette 2020/26)**

(54) **TIRE**

REIFEN

PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2018 JP 2018237384**

(43) Date of publication of application:
**27.10.2021 Bulletin 2021/43**

(73) Proprietor: **Sumitomo Rubber Industries, Ltd.**
**Kobe-shi, Hyogo 651-0072 (JP)**

(72) Inventor: **YOSHIOKA, Mikako**
**Kobe-shi, Hyogo 651-0072 (JP)**

(74) Representative: **TBK**
**Bavariaring 4-6**
**80336 München (DE)**

(56) References cited:
**EP-A1- 2 655 089**
**EP-B1- 2 655 089**
**WO-A1-2017/104781**
**WO-A1-2018/173870**
**FR-A1- 2 966 157**
**JP-A- 2008 308 615**
**JP-A- 2010 132 236**
**JP-A- 2011 105 041**
**JP-A- 2013 514 399**
**JP-A- H03 266 706**

- **DATABASE WPI Week 201446, Derwent World Patents Index; AN 2014-M43242, XP002805260**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 7/00, C08K 3/04, C08K 3/30, C08K 3/36, C08L 9/00;**
**C08L 7/00, C08K 3/04, C08K 3/36, C08L 9/00, C08L 97/00;**
**C08L 9/00, C08K 3/04, C08K 3/30, C08K 3/36, C08L 7/00**

## Description

TECHNICAL FIELD

The present invention relates to tires.

BACKGROUND ART

Studded tires or tire chains have been used for driving on snowy and icy roads. However, since they may cause environmental problems such as dust pollution, studless winter tires have been proposed to replace them. The materials and structure of the studless winter tires are designed to allow the tires to be used on snowy and icy roads with rougher surfaces than normal roads. For example, a rubber composition containing a diene rubber with excellent low-temperature properties and a rubber composition containing a large amount of softeners to enhance the softening effect have been developed (see, for example, JP 2009-091482 A).

Another proposed method is to introduce foaming or capsules into a tread to form voids in the rubber to improve ice performance. However, since voids are also formed inside the tread, as in a sponge, the resulting tire has the disadvantage of reduced dry handling stability.

Thus, it is desirable for a tire, such as a studless winter tire, to improve snow and ice performance while ensuring dry handling stability.

Further, WO 2018/173870 A1 discloses a tread rubber composition for studless tires, which contains lignin derivative particles. JP 2008/308615 A discloses a rubber composition for tire comprising 100 pts.wt. of a diene rubber, 10-100 pts.wt. of silica and 1-30 pts.wt. of a lignonsulfonic acid salt or its modified form. JP 2013/514399 A discloses a winter tire. WO 2017/104781 A1 discloses a tire having a tread. JP H03 266706 A discloses a pneumatic tire having tread part formed out of specific rubber composition including a water soluble inorganic compound. EP 2655089 A1 discloses a rubber composition comprising at least one diene elastomer, more than 30 pce of a liquid plasticising agent, 50 to 150 pce of a reinforcing filler, and 2 to 60 pce of microparticles of potassium sulphate. FR 2966157 A1 discloses a rubber composition for a tire tread.

SUMMARY OF INVENTION

TECHNICAL PROBLEM

In this context, the present invention aims to provide tires with a well-balanced improvement in snow and ice performance and dry handling stability.

SOLUTION TO PROBLEM

The present invention relates to tires, containing a vulcanized rubber composition which satisfies the relationship (I): $\Delta Sv \geq 5\%$ when it is sampled inward in a tire radial direction from a tread interior surface exposed by removing a tread surface to a depth of 3 mm inward in the tire radial direction, wherein $\Delta Sv$ represents a rate of change in an area occupied by depressions on the tread interior surface before and after immersion under the following conditions:

(Immersion conditions)

The vulcanized rubber composition is entirely immersed for three hours in 1000 mL of water maintained at 25°C.

The vulcanized rubber composition has a complex modulus at 70°C (70°C E*) satisfying the relationship (II): 70°C E* $\geq$ 2.5 MPa.

The vulcanized rubber composition is prepared from a tread rubber composition containing at least one rubber component and at least one water-soluble fine particle. The median particle size D50 of the water-soluble fine particles is 1 $\mu$m to 100 $\mu$m.

The tires include a tread containing the vulcanized rubber composition, and the tread has a groove pattern asymmetric in a tire width direction to contact a road.

The tires are preferably studless winter tires.

ADVANTAGEOUS EFFECTS OF INVENTION

The tires of the present invention contain a vulcanized rubber composition which satisfies relationship (I) with respect to $\Delta Sv$ when it is sampled inward in the tire radial direction from a tread interior surface exposed by removing the

tread surface to a depth of 3 mm inward in the tire radial direction, wherein ΔSv represents the rate of change in the area occupied by depressions on the tread interior surface before and after immersion under the above-described conditions. Such tires provide a well-balanced improvement in snow and ice performance and dry handling stability.

BRIEF DESCRIPTION OF DRAWINGS

Fig. 1 is an exemplary schematic diagram showing a vulcanized rubber composition (sample) sampled inward in the tire radial direction from a tread interior surface exposed by removing the tread surface to a depth of 3 mm inward in the tire radial direction.

DESCRIPTION OF EMBODIMENTS

The tires of the present invention contain a vulcanized rubber composition which satisfies relationship (I) with respect to ΔSv when it is sampled inward in the tire radial direction from a tread interior surface exposed by removing the tread surface to a depth of 3 mm inward in the tire radial direction, wherein ΔSv represents the rate of change in the area occupied by depressions on the tread interior surface before and after immersion under the above-described conditions.

In other words, the tires are such that: when a rubber composition having a predetermined thickness inward in the tire radial direction from the tread surface of the tires is first removed to expose a surface from the tread interior, and a sample (vulcanized rubber composition (after vulcanization)) is taken from the exposed surface, the sample exhibits at least a 5% (% by area) increase in the area occupied by depressions on the tread interior surface (the plane forming the tread interior surface of the sample) before and after immersion in water under predetermined conditions. Such tires provide a well-balanced improvement in snow and ice performance and dry handling stability.

The reason for this advantageous effect is not clear, but is believed to be as follows.

For example, when the tires with a tread surface that is dried during running on a dry road are brought into contact with a low-temperature wet road to shift to wet running, the number of holes formed on the tread surface is increased, which enhances the ability to remove a water film on a snowy or icy road, resulting in excellent snow and ice grip performance. On the other hand, the tread interior is not affected, so that good stiffness is maintained and there will not be a decrease in dry handling stability as observed in foamed tires in which voids are always present in the tread interior. Thus, excellent handling stability is ensured. Therefore, it is believed that the tires satisfying relationship (I) provide improved snow and ice performance while maintaining good dry handling stability, thereby resulting in a well-balanced improvement in these properties.

The tires contain a vulcanized rubber composition (sample) which satisfies the relationship (I): $\Delta Sv \geq 5\%$ when it is sampled inward in the tire radial direction from a tread interior surface exposed by removing the tread surface to a depth of 3 mm inward in the tire radial direction, wherein ΔSv represents the rate of change in the area occupied by depressions on the tread interior surface after immersion under the following conditions:

(Immersion conditions)

The vulcanized rubber composition is entirely immersed for three hours in 1000 mL of water maintained at 25°C.

ΔSv in relationship (I) is obtained by subtracting the percentage (Svb, % by area) of the area occupied by depressions on the tread interior surface before the immersion from the percentage (Sva, % by area) of the area occupied by depressions on the tread interior surface after the immersion. The "percentage of the area occupied by depressions on the tread interior surface" refers to the percentage (% by area) occupied by depressions (holes) based on 100% by area of the tread interior surface.

From the standpoint of snow and ice performance, ΔSv (% by area) in relationship (I) preferably satisfies $\Delta Sv \geq 10\%$, more preferably $\Delta Sv \geq 20\%$, still more preferably $\Delta Sv \geq 30\%$, particularly preferably $\Delta Sv \geq 35\%$. Moreover, the lower limit may be $\Delta Sv \geq 22\%$ or $\Delta Sv \geq 36\%$. The upper limit is not limited, but from the standpoints of durability and dry handling stability, it is preferably $\Delta Sv \leq 70\%$, more preferably $\Delta Sv \leq 60\%$, still more preferably $\Delta Sv \leq 50\%$. Moreover, the upper limit may be $\Delta Sv \leq 48\%$.

From the standpoint of snow and ice performance, Sva preferably satisfies $Sva \geq 5\%$, more preferably $Sva \geq 10\%$, still more preferably $Sva \geq 20\%$, further preferably $Sva \geq 30\%$, particularly preferably $Sva \geq 35\%$. Moreover, the lower limit may be $Sva \geq 22\%$ or $Sva \geq 36\%$. The upper limit is not limited, but from the standpoints of durability and dry handling stability, it is preferably $Sva \leq 70\%$, more preferably $Sva \leq 60\%$, still more preferably $Sva \leq 50\%$. Moreover, the upper limit may be $Sva \leq 48\%$.

Svb is not limited, but it preferably satisfies $Svb \leq 3\%$, more preferably $Svb \leq 1\%$. The lower limit of Svb is not limited, and Svb may be 0%.

With respect to ΔSv, Sva, and Svb, for example, a predetermined area (for example, 1 to 25 $mm^2$) of the tread interior surface may be photographed with a microscope to determine the area (%) occupied by depressions relative to

100% of the predetermined area from the photograph.

Any method that can appropriately change the area occupied by depressions on the tread interior surface before and after immersion under the above-described conditions may be used to adjust ΔSv to relationship (I) or to adjust Sva within the range indicated above. For example, when a water-soluble material such as water-soluble fine particles described later is incorporated into a tread rubber composition, a tread interior surface containing the water-soluble material may be formed before the immersion, while a tread interior surface with depressions (hole portions) produced by the dissolution of the water-soluble material may be formed after the immersion. Thus, the incorporation of a water-soluble material into a tread, for example, may lead to an increase in the percentage of the area occupied by depressions on the tread interior surface before and after the immersion. Accordingly, when such a tire is used, a tread surface containing the water-soluble material is provided during dry running, while a tread surface with depressions produced by the dissolution of the water-soluble material is provided during wet running. Therefore, during wet running, the depressions formed on the tread surface enhance the ability to remove a water film on a snowy or icy road, resulting in excellent snow and ice grip performance, while during dry running good stiffness is maintained and excellent handling stability is ensured.

The vulcanized rubber composition (sample) may be, for example, a vulcanized rubber composition having a size of 10 to 20 mm (length) × 10 to 20 mm (width) × 2 to 4 mm (thickness) (e.g., a sample of 15 mm × 15 mm × 3 mm) in which the size of the surface formed by the tread interior surface is 10 to 20 mm × 10 to 20 mm, and the thickness (depth) inward in the tire radial direction is 2 to 4 mm.

From the standpoint of dry handling stability, the vulcanized rubber composition (before undergoing the immersion) has a complex modulus at 70°C (70°C E*) satisfying the relationship (II): 70°C E* ≥ 2.5 MPa.

From the standpoint of dry handling stability, the complex modulus more preferably satisfies 70°C E* ≥ 3.0 MPa, still more preferably 70°C E* ≥ 3.3 MPa, particularly preferably 70°C E* ≥ 3.4 MPa. Moreover, the complex modulus may satisfy 70°C E* ≥ 3.5 MPa, 70°C E* ≥ 3.7 MPa, 70°C E* ≥ 3.8 MPa, 70°C E* ≥ 3.9 MPa, 70°C E* ≥ 4.1 MPa, or 70°C E* ≥ 4.3 MPa. The upper limit is not limited, but from the standpoint of durability, it is preferably 70°C E* ≤ 10.0 MPa, more preferably 70°C E* ≤ 8.0 MPa, still more preferably 70°C E* ≤ 7.0 MPa. The "70°C E*" in relationship (II) refers to the dynamic modulus (E*, MPa) determined by viscoelastic measurement at a temperature of 70°C, a frequency of 10Hz, an initial strain of 10%, and a dynamic strain of 2%. It can be measured as described later in EXAMPLES.

70°C E* may be adjusted to relationship (II), for example, by mainly changing the type and amount of rubber component, the type and amount of reinforcing agent (filler), or the amount of softener. Specifically, E* tends to be enhanced by increasing the amount of reinforcing agent or reducing the amount of softener.

The tread of the tires including the above-described tread surface and tread interior surface is prepared from a tread rubber composition containing one or more rubber components and one or more water-soluble fine particles.

(Rubber component)

The rubber components of the rubber composition suitably include one or more isoprene-based rubbers and one or more polybutadiene rubbers.

Examples of the isoprene-based rubbers include natural rubbers (NR), polyisoprene rubbers (IR), refined NR, modified NR, and modified IR. The NR and IR may be those commonly used in the tire industry, such as SIR20, RSS#3, and TSR20 for the NR, and IR2200 for the IR. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. Each of these may be used alone, or two or more of these may be used in combination.

From the standpoint of the balance between snow and ice performance and dry handling stability, the amount of the isoprene-based rubbers based on 100% by mass of the rubber components is preferably 20% by mass or more, more preferably 30% by mass or more. The upper limit of the amount is not limited, but it is preferably 80% by mass or less, more preferably 60% by mass or less, still more preferably 50% by mass or less.

Any BR may be used, and examples include those commonly used in the tire industry, such as high-cis BR, BR containing 1,2-syndiotactic polybutadiene crystals (SPB-containing BR), polybutadiene rubbers synthesized using rare earth catalysts (rare earth-catalyzed BR), and tin-modified polybutadiene rubbers (tin-modified BR) obtained by modification with tin compounds. The BR may be commercially available from Ube Industries, Ltd., JSR Corporation, Asahi Kasei Corporation, Zeon Corporation, etc. Each of these may be used alone, or two or more of these may be used in combination.

The cis content of the BR is preferably 80% by mass or higher, more preferably 85% by mass or higher, still more preferably 90% by mass or higher, particularly preferably 95% by mass or higher. With such BR, good snow and ice performance can be obtained.

Herein, the cis content is determined by infrared absorption spectrometry.

From the standpoint of the balance between snow and ice performance and dry handling stability, the amount of

the BR based on 100% by mass of the rubber components is preferably 10% by mass or more, more preferably 20% by mass or more, still more preferably 30% by mass or more, particularly preferably 50% by mass or more. The upper limit of the amount is not limited, but it is preferably 90% by mass or less, more preferably 80% by mass or less, still more preferably 70% by mass or less.

The BR may be either unmodified or modified BR.

The modified BR may be, for example, BR having a functional group interactive with a filler such as silica. Examples include a chain end-modified BR obtained by modifying at least one chain end of a BR with a compound (modifier) having the functional group (i.e., a chain end-modified BR terminated with the functional group); a backbone-modified BR having the functional group in the backbone; a backbone- and chain end-modified BR having the functional group in both the backbone and chain end (e.g., a backbone- and chain end-modified BR in which the backbone has the functional group and at least one chain end is modified with the modifier); and a chain end-modified BR that has been modified (coupled) with a polyfunctional compound having two or more epoxy groups in the molecule so that a hydroxy or epoxy group is introduced.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

The modified BR may suitably be, for example, BR modified with a compound (modifier) represented by the following formula:

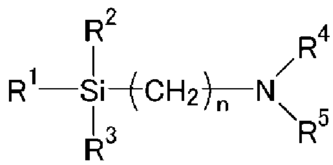

wherein $R^1$, $R^2$, and $R^3$ are the same as or different from each other and each represent an alkyl, alkoxy, silyloxy, acetal, carboxyl (-COOH), or mercapto (-SH) group or a derivative thereof; $R^4$ and $R^5$ are the same as or different from each other and each represent a hydrogen atom or an alkyl group, and $R^4$ and $R^5$ may be joined together to form a ring structure with the nitrogen atom; and n represents an integer.

The BR modified with the compound (modifier) of the above formula may suitably be, for example, solutionpolymerized polybutadiene rubber (BR) having a polymerizing end (active terminal) modified with the compound of the above formula, among others.

$R^1$, $R^2$, and $R^3$ may each suitably be an alkoxy group, preferably a C1-C8 alkoxy group, more preferably a C1-C4 alkoxy group. $R^4$ and $R^5$ may each suitably be an alkyl group, preferably a C1-C3 alkyl group. The symbol n is preferably 1 to 5, more preferably 2 to 4, still more preferably 3. When $R^4$ and $R^5$ are joined together to form a ring structure with the nitrogen atom, the ring structure is preferably a 4- to 8-membered ring. The term "alkoxy group" encompasses cycloalkoxy groups (e.g., cyclohexyloxy group) and aryloxy groups (e.g., phenoxy and benzyloxy groups).

Specific examples of the modifier include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. Preferred among these are 3-dimethylaminopropyltrimethoxysilane, 3-dimethylaminopropyltriethoxysilane, and 3-diethylaminopropyltrimethoxysilane. Each of these may be used alone, or two or more of these may be used in combination.

The modified BR may also suitably be BR modified with any of the following compounds (modifiers): including, for example, polyglycidyl ethers of polyhydric alcohols such as ethylene glycol diglycidyl ether, glycerol triglycidyl ether, trimethylolethane triglycidyl ether, and trimethylolpropane triglycidyl ether; polyglycidyl ethers of aromatic compounds having two or more phenol groups such as diglycidylated bisphenol A; polyepoxy compounds such as 1,4-diglycidylbenzene, 1,3,5-triglycidylbenzene, and polyepoxidized liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxyaniline, diglycidylorthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3-bisaminomethylcyclohexane;

amino group-containing acid chlorides such as bis(1-methylpropyl)carbamyl chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis(glycidyloxypropyl)-tetramethyldisiloxane and (3-glycidyloxypropyl)-pentamethyldisiloxane;

sulfide group-containing silane compounds such as (trimethylsilyl) [3-(trimethoxysilyl)propyl]sulfide, (trimethylsilyl) [3-(triethoxysilyl)propyl]sulfide, (trimethylsilyl) [3-(tripropoxysilyl)propyl]sulfide, (trimethylsilyl) [3-(tributoxysilyl)propyl]sulfide, (trimethylsilyl) [3-(methyldimethoxysilyl)propyl]sulfide, (trimethylsilyl) [3-(methyldiethoxysilyl)propyl]sulfide, (trimethylsilyl) [3-(methyldipropoxysilyl)propyl]sulfide, and (trimethylsilyl)[3-(methyldibutoxysilyl)propyl]sulfide; N-substituted aziridine compounds such as ethyleneimine and propyleneimine; alkoxysilanes such as methyltriethoxysilane; (thio)benzophenone compounds containing amino and/or substituted amino groups such as 4-N,N-dimethylaminobenzophenone, 4-N,N-di-t-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis(tetraethylamino)benzophenone; benzaldehyde compounds containing amino and/or substituted amino groups such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-w-laurilolactam, N-vinyl-ω-laurilolactam, N-methyl-β-propiolactam, and N-phenyl-β-propiolactam; and

N,N-bis(2,3-epoxypropoxy)-aniline, 4,4-methylene-bis(N,N-glycidylaniline), tris(2,3-epoxypropyl)-1,3,5-triazine-2,4,6-triones, N,N-diethylacetamide, N-methylmaleimide, N,N-diethylurea, 1,3-dimethylethyleneurea, 1,3-divinylethyleneurea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. Preferred is BR modified with alkoxysilanes, among others.

The modification with any of the compounds (modifiers) may be carried out by known methods.

In the rubber composition, the combined amount of the isoprene-based rubbers and the BR based on 100% by mass of the rubber components is preferably 30% by mass or more, more preferably 60% by mass or more, still more preferably 80% by mass or more, particularly preferably 100% by mass. A higher combined amount tends to result in a better balance between snow and ice performance and dry handling stability.

The rubber composition may contain other rubber components as long as they do not impair the advantageous effect. Examples of such other rubbers include diene rubbers such as styrene butadiene rubbers (SBR), acrylonitrile butadiene rubbers (NBR), chloroprene rubbers (CR), butyl rubbers (IIR), and styrene-isoprene-butadiene copolymer rubbers (SIBR).

(Water-soluble fine particles)

The water-soluble fine particles may be any fine particle that is soluble in water. Examples include materials having a water solubility of at least 1 g/100 g of water at room temperature (20°C).

From the standpoint of the balance between snow and ice performance and dry handling stability, the median particle size (median size, D50) of the water-soluble fine particles is 1 μm to 100 μm, more preferably 2 μm to 100 μm, still more preferably 2 μm to 100 μm. The lower limit may be 10 μm or more.

Herein, the median particle size can be measured by laser diffraction.

The amount of the water-soluble fine particles per 100 parts by mass of the rubber components is 5 parts by mass or more, more preferably 7 parts by mass or more, still more preferably 15 parts by mass or more, particularly preferably 20 parts by mass or more, most preferably 25 parts by mass or more. The lower limit may be 30 parts by mass or more. When the amount is not less than the lower limit, good snow and ice performance tends to be obtained. The amount is preferably 100 parts by mass or less, more preferably 70 parts by mass or less, still more preferably 50 parts by mass or less, particularly preferably 40 parts by mass or less. When the amount is not more than the upper limit, good dry handling stability tends to be obtained.

Examples of the water-soluble fine particles include water-soluble inorganic salts and water-soluble organic substances. Each of these may be used alone, or two or more of these may be used in combination.

Examples of the water-soluble inorganic salts include metal sulfates such as magnesium sulfate and potassium sulfate; metal chlorides such as potassium chloride, sodium chloride, calcium chloride, and magnesium chloride; metal hydroxides such as potassium hydroxide and sodium hydroxide; carbonates such as potassium carbonate and sodium carbonate; and phosphates such as sodium hydrogen phosphate and sodium dihydrogen phosphate.

Examples of the water-soluble organic substances include lignin derivatives and saccharides.

Suitable examples of the lignin derivatives include lignin sulfonic acids and lignosulfonates. The lignin derivatives may be prepared either by a sulfite pulping method or a kraft pulping method.

Examples of the lignosulfonates include alkali metal salts, alkaline earth metal salts, ammonium salts, and alcohol amine salts of lignin sulfonic acids. Preferred among these are alkali metal salts (e.g., potassium or sodium salts) or

alkaline earth metal salts (e.g., calcium, magnesium, lithium, or barium salts) of lignin sulfonic acids.

The degree of sulfonation of the lignin derivatives is preferably 1.5 to 8.0/$OCH_3$. Such lignin derivatives include lignin sulfonic acids and/or lignosulfonates in which lignin and/or degradation products thereof are at least partially substituted with a sulfo group (sulfone group). The sulfo group of the lignin sulfonic acids may be unionized, or the hydrogen atom of the sulfo group may be replaced by an ion such as a metal ion. The degree of sulfonation is more preferably 3.0 to 6.0/$OCH_3$. When the degree of sulfonation is within the range indicated above, good snow and ice performance tends to be obtained, and its balance with dry handling stability tends to be improved.

The degree of sulfonation of the lignin derivative particles (lignin derivatives that form the particles) refers to the ratio of introduced sulfo groups calculated by the following equation:

Degree of sulfonation (/$OCH_3$) = (S (mol) in sulfone groups in lignin derivative)/(methoxyl groups (mol) of lignin derivative).

The saccharides may be any monosaccharide, oligosaccharide, or polysaccharide having any number of carbon atoms. Examples of such monosaccharides include trioses such as aldotriose and ketotriose; tetroses such as erythrose and threose; pentoses such as xylose and ribose; hexoses such as mannose, allose, altrose, and glucose; and heptoses such as sedoheptulose. Examples of such oligosaccharides include disaccharides such as sucrose and lactose; trisaccharides such as raffinose and melezitose; tetrasaccharides such as acarbose and stachyose; and higher oligosaccharides such as xylooligosaccharide and cellooligosaccharide. Examples of such polysaccharides include glycogen, starch (amylose, amylopectin), cellulose, hemicellulose, dextrin, and glucan.

(Silica)

From the standpoint of the balance of the properties, the rubber composition preferably contains one or more types of silica as filler. Examples of the silica include dry silica (anhydrous silica) and wet silica (hydrous silica). Wet silica is preferred among these because it contains a large number of silanol groups. Commercial products available from Degussa, Rhodia, Tosoh Silica Corporation, Solvay Japan, Tokuyama Corporation, etc. may be used. Each of these may be used alone, or two or more of these may be used in combination.

The amount of the silica per 100 parts by mass of the rubber components is preferably 25 parts by mass or more, more preferably 30 parts by mass or more, still more preferably 50 parts by mass or more, further preferably 55 parts by mass or more, particularly preferably 60 parts by mass or more. When the amount is not less than the lower limit, good grip performance and good handling stability tend to be obtained. The upper limit of the amount is not limited, but it is preferably 300 parts by mass or less, more preferably 200 parts by mass or less, still more preferably 170 parts by mass or less, particularly preferably 100 parts by mass or less, most preferably 80 parts by mass or less. When the amount is not more than the upper limit, good dispersibility tends to be obtained.

The nitrogen adsorption specific surface area ($N_2SA$) of the silica is preferably 70 $m^2/g$ or more, more preferably 140 $m^2/g$ or more, still more preferably 160 $m^2/g$ or more. When the $N_2SA$ is not less than the lower limit, good grip performance and good tensile strength at break tend to be obtained. The upper limit of the $N_2SA$ of the silica is not limited, but it is preferably 500 $m^2/g$ or less, more preferably 300 $m^2/g$ or less, still more preferably 250 $m^2/g$ or less. When the $N_2SA$ is not more than the upper limit, good dispersibility tends to be obtained.

The $N_2SA$ of the silica is measured by the BET method in accordance with ASTM D3037-93.

From the standpoint of the balance between snow and ice performance and dry handling stability, the percentage of the silica based on 100% by mass of the combined amount of the silica and carbon black in the rubber composition is preferably 50% by mass or more, more preferably 80% by mass or more, still more preferably 90% by mass or more.

(Silane coupling agent)

The rubber composition containing silica preferably further contains one or more silane coupling agents.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXTand NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Commercial products available from Degussa, Momentive, Shin-Etsu Silicone, Tokyo Chemical Industry Co., Ltd., AZmax. Co., Dow Corning Toray Co., Ltd., etc. may be used. Each of these may be used alone, or two or more of these may be used in combination.

The amount of the silane coupling agents per 100 parts by mass of the silica is preferably 3 parts by mass or more, more preferably 6 parts by mass or more. When the amount is 3 parts by mass or more, good properties such as tensile strength at break tend to be obtained. The amount is also preferably 20 parts by mass or less, more preferably 15 parts by mass or less. When the amount is 20 parts by mass or less, an effect commensurate with the amount tends to be obtained.

(Carbon black)

From the standpoint of the balance of the properties, the rubber composition preferably contains one or more types of carbon black as filler. Any carbon black may be used, and examples include N134, N110, N220, N234, N219, N339, N330, N326, N351, N550, and N762. Commercial products available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. may be used. Each of these may be used alone, or two or more of these may be used in combination.

The amount of the carbon black per 100 parts by mass of the rubber components is preferably 1 part by mass or more, more preferably 3 parts by mass or more. When the amount is not less than the lower limit, good snow and ice performance and good dry handling stability tend to be obtained. The amount is also preferably 10 parts by mass or less, more preferably 7 parts by mass or less. When the amount is not more than the upper limit, the rubber composition tends to provide good processability.

The nitrogen adsorption specific surface area ($N_2SA$) of the carbon black is preferably 50 $m^2/g$ or more, more preferably 80 $m^2/g$ or more, still more preferably 100 $m^2/g$ or more. When the $N_2SA$ is not less than the lower limit, good snow and ice performance and good dry handling stability tend to be obtained. The $N_2SA$ is also preferably 200 $m^2/g$ or less, more preferably 150 $m^2/g$ or less, still more preferably 130 $m^2/g$ or less. When the $N_2SA$ is not more than the upper limit, the carbon black tends to provide good dispersibility.

The nitrogen adsorption specific surface area of the carbon black is determined in accordance with JIS K6217-2:2001.

From the standpoint of the balance between snow and ice performance and dry handling stability, the combined amount of the silica and carbon black per 100 parts by mass of the rubber components in the rubber composition is preferably 50 to 120 parts by mass. The combined amount is more preferably 55 parts by mass or more, still more preferably 60 parts by mass or more, while it is more preferably 100 parts by mass or less, still more preferably 80 parts by mass or less.

(Liquid plasticizer)

From the standpoints of snow and ice performance and dry handling stability, the rubber composition suitably contains one or more liquid plasticizers.

The amount of the liquid plasticizers per 100 parts by mass of the rubber components in the rubber composition is preferably 5 parts by mass or more, more preferably 10 parts by mass or more, still more preferably 15 parts by mass or more. The upper limit is not limited, but from the standpoints of properties such as dry handling stability, it is preferably 50 parts by mass or less, more preferably 40 parts by mass or less, still more preferably 30 parts by mass or less.

The liquid plasticizers may be any plasticizer that is liquid at 25°C. Examples include oils, liquid resins, and liquid diene polymers. Each of these may be used alone, or two or more of these may be used in combination.

Examples of the oils include process oils and plant oils, and mixtures thereof. Examples of the process oils include paraffinic process oils, aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Commercial products available from Idemitsu Kosan Co., Ltd., Sankyo Yuka Kogyo K.K., Japan Energy Corporation, Olisoy, H&R, Hokoku Corporation, Showa Shell Sekiyu K.K., Fuji Kosan Co., Ltd., etc. may be used. Process oils are preferred among these.

Examples of the liquid resins include resins which are liquid at 25°C, such as terpene resins (including terpene phenol resins and aromatic modified terpene resins), rosin resins, styrene resins, C5 resins, C5/C9 resins, coumarone-indene resins (including resins based on coumarone or indene alone), olefin resins, polyurethane resins, and acrylic resins.

Examples of the liquid diene polymers include diene polymers which are liquid at 25°C, such as liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers). The chain end or backbone of these polymers may be modified with a polar group.

(Resin)

The rubber composition may contain one or more resins (solid resins: resins which are solid at room temperature (25°C)). Resins (solid resins) having a softening point of 60°C or higher are preferred. The softening point is more preferably 70°C or higher, still more preferably 80°C or higher, while the softening point is preferably 150°C or lower, more preferably 140°C or lower, still more preferably 130°C or lower.

Herein, the softening point of the resins is determined in accordance with JIS K 6220-1:2001 using a ring and ball softening point measuring apparatus and defined as the temperature at which the ball drops down.

Examples of the resins (solid resins) include aromatic vinyl polymers, coumarone-indene resins, coumarone resins, indene resins, phenol resins, rosin resins, petroleum resins, terpene resins, and acrylic resins. Commercial products available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JX Energy Corporation, Arakawa Chemical Industries, Ltd., Taoka Chemical Co., Ltd., Toagosei Co., Ltd., etc. may be used. Each of these may be used alone, or two or more of these may be used in combination. Aromatic vinyl polymers, coumarone-indene resins, coumarone resins, indene resins, phenol resins, rosin resins, petroleum resins, and terpene resins are preferred among these, with aromatic vinyl polymers, coumarone-indene resins, terpene resins, and rosin resins being more preferred.

The term "aromatic vinyl polymers" refers to resins produced by polymerization of α-methylstyrene and/or styrene. Examples include styrene homopolymers (styrene resins), α-methylstyrene homopolymers (α-methylstyrene resins), copolymers of α-methylstyrene and styrene, and copolymers of styrene and other monomers.

The term "coumarone-indene resins" refers to resins that contain coumarone and indene as main monomer components forming the skeleton (backbone) of the resins. Examples of monomer components which may be contained in the skeleton in addition to coumarone and indene include styrene, α-methylstyrene, methylindene, and vinyltoluene.

The term "coumarone resins" refers to resins that contain coumarone as a main monomer component forming the skeleton (backbone) of the resins.

The term "indene resins" refers to resins that contain indene as a main monomer component forming the skeleton (backbone) of the resins.

Examples of the phenol resins include those produced by reaction of phenol with aldehydes such as formaldehyde, acetaldehyde, or furfural using acid or alkali catalysts. Preferred among these are those produced by reaction using acid catalysts (e.g., novolac-type phenol resins).

Examples of the rosin resins include rosin-based resins typified by natural rosins, polymerized rosins, modified rosins, and esterified compounds thereof, and hydrogenated products thereof.

Examples of the petroleum resins include C5 resins, C9 resins, C5/C9 resins, and dicyclopentadiene (DCPD) resins.

Examples of the terpene resins include polyterpene resins produced by polymerization of terpene compounds, and aromatic modified terpene resins produced by polymerization of terpene compounds and aromatic compounds. Hydrogenated products of the foregoing resins may also be used.

The term "polyterpene resins" refers to resins produced by polymerization of terpene compounds. The term "terpene compounds" refers to hydrocarbons having a composition represented by $(C_5H_8)_n$ or oxygen-containing derivatives thereof, each of which has a terpene backbone and is classified as, for example, a monoterpene ($C_{10}H_{16}$), sesquiterpene ($C_{15}H_{24}$), or diterpene ($C_{20}H_{32}$). Examples of such terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include resins made from the above-mentioned terpene compounds, such as pinene resins, limonene resins, dipentene resins, and pinene-limonene resins. Pinene resins are preferred among these. Pinene resins, which usually contain two isomers, i.e. α-pinene and β-pinene, are classified into β-pinene resins mainly containing β-pinene and α-pinene resins mainly containing α-pinene, depending on the proportions of the components in the resins.

Examples of the aromatic modified terpene resins include terpene phenol resins made from the above-mentioned terpene compounds and phenolic compounds, and terpene styrene resins made from the above-mentioned terpene compounds and styrene compounds. Terpene phenol styrene resins made from the terpene compounds, phenolic compounds, and styrene compounds may also be used. Examples of the phenolic compounds include phenol, bisphenol A, cresol, and xylenol. Examples of the styrene compounds include styrene and α-methylstyrene.

Examples of the acrylic resins include styrene acrylic resins such as styrene acrylic resins containing carboxyl groups which are produced by copolymerization of aromatic vinyl monomer components and acrylic monomer components. In particular, solvent-free, carboxyl group-containing styrene acrylic resins are suitable.

The solvent-free, carboxyl group-containing styrene acrylic resins may be (meth)acrylic resins (polymers) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5,010,166, and annual research report TREND 2000 issued by Toagosei Co., Ltd., vol. 3, pp. 42-45) using no or minimal amounts of auxiliary raw materials such as polymerization initiators, chain transfer agents, and organic solvents. Herein, the term "(meth)acrylic" means methacrylic and acrylic.

Examples of the acrylic monomer components of the acrylic resins include (meth)acrylic acid and (meth)acrylic acid derivatives such as (meth)acrylic acid esters (e.g., alkyl esters, aryl esters, and aralkyl esters such as 2-ethylhexyl acrylate), (meth)acrylamide, and (meth)acrylamide derivatives. The term "(meth)acrylic acid" is a general term for acrylic acid and methacrylic acid.

Examples of the aromatic vinyl monomer components of the acrylic resins include aromatic vinyls such as styrene, α-methylstyrene, vinyltoluene, vinylnaphthalene, divinylbenzene, trivinylbenzene, and divinylnaphthalene.

In addition to the (meth)acrylic acid or (meth)acrylic acid derivatives, and aromatic vinyls, other monomer components may also be used as monomer components of the acrylic resins.

From the standpoint of the balance between low-temperature ice performance, high-temperature ice performance, and wet grip performance, the resins are preferably at least one selected from the group consisting of C5 resins, C9 resins, limonene resins, α-pinene resins, β-pinene resins, terpene phenol resins, DCPD resins, styrene resins, α-methylstyrene resins, coumarone resins, indene resins, phenol resins, and rosin resins. From the standpoint of anti-snow sticking properties, limonene resins, α-pinene resins, β-pinene resins, terpene phenol resins, and DCPD resins are particularly preferred.

From the standpoint of the balance between snow and ice performance and dry handling stability, the amount of the resins per 100 parts by mass of the rubber components in the rubber composition is preferably 5 parts by mass or more, more preferably 10 parts by mass or more, still more preferably 15 parts by mass or more. The upper limit is not limited, but it is preferably 50 parts by mass or less, more preferably 30 parts by mass or less, still more preferably 25 parts by mass or less.

(Other materials)

From the standpoints of properties such as crack resistance and ozone resistance, the rubber composition preferably contains one or more antioxidants.

Any antioxidant may be used, and examples include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate] methane. Preferred among these are p-phenylenediamine or quinoline antioxidants, with N-(1,3-dimethylbutyl)-N'-phenyl-p-phenylenediamine or 2,2,4-trimethyl-1,2-dihydroquinoline polymer being more preferred. Commercial products available from Seiko Chemical Co., Ltd., Sumitomo Chemical Co., Ltd., Ouchi Shinko Chemical Industrial Co., Ltd., Flexsys, etc. may be used.

The amount of the antioxidants per 100 parts by mass of the rubber components is preferably 0.2 parts by mass or more, more preferably 0.5 parts by mass or more. When the amount is not less than the lower limit, sufficient ozone resistance tends to be obtained. The amount is preferably 7.0 parts by mass or less, more preferably 4.0 parts by mass or less. When the amount is not more than the upper limit, a good tire appearance tends to be obtained.

The rubber composition preferably contains one or more types of stearic acid. From the standpoint of the balance of the properties, the amount of the stearic acid per 100 parts by mass of the rubber components is preferably 0.5 to 10 parts by mass, more preferably 0.5 to 5 parts by mass.

The stearic acid may be conventional ones, e.g., available from NOF Corporation, Kao Corporation, FUJIFILM Wako Pure Chemical Corporation, or Chiba Fatty Acid Co., Ltd.

The rubber composition preferably contains one or more types of zinc oxide. From the standpoint of the balance of the properties, the amount of the zinc oxide per 100 parts by mass of the rubber components is preferably 0.5 to 10 parts by mass, more preferably 1 to 5 parts by mass.

The zinc oxide may be conventional ones, e.g., available from Mitsui Mining & Smelting Co., Ltd., Toho Zinc Co., Ltd., HakusuiTech Co., Ltd., Seido Chemical Industry Co., Ltd., or Sakai Chemical Industry Co., Ltd.

The rubber composition may contain one or more waxes. The amount of the waxes per 100 parts by mass of the

rubber components is preferably 0.1 to 5 parts by mass, more preferably 0.5 to 3 parts by mass.

Any wax may be used, and examples include petroleum waxes, natural waxes, and synthetic waxes produced by purifying or chemically treating a plurality of waxes. Each of these waxes may be used alone, or two or more of these may be used in combination.

Examples of the petroleum waxes include paraffin waxes and microcrystalline waxes. The natural waxes may be any wax derived from non-petroleum resources, and examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of the foregoing. Commercial products available from Ouchi Shinko Chemical Industrial Co., Ltd., Nippon Seiro Co., Ltd., Seiko Chemical Co., Ltd., etc. may be used. The amount of the waxes may be appropriately selected in view of ozone resistance and cost.

The rubber composition preferably contains one or more types of sulfur to moderately crosslink the polymer chains, thereby imparting a good balance of the properties.

The amount of the sulfur per 100 parts by mass of the rubber components is preferably 0.1 parts by mass or more, more preferably 0.5 parts by mass or more, still more preferably 0.7 parts by mass or more. The amount is preferably 6.0 parts by mass or less, more preferably 4.0 parts by mass or less, still more preferably 3.0 parts by mass or less. When the amount is within the range indicated above, a good balance of the properties tends to be obtained.

Examples of the sulfur include those commonly used in the rubber industry, such as powdered sulfur, precipitated sulfur, colloidal sulfur, insoluble sulfur, highly dispersible sulfur, and soluble sulfur. Commercial products available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc. may be used. Each of these may be used alone, or two or more of these may be used in combination.

The rubber composition preferably contains one or more vulcanization accelerators.

The amount of the vulcanization accelerators is not limited and may be arbitrarily set depending on the desired cure rate or crosslink density. The amount is usually 0.3 to 10 parts by mass, preferably 0.5 to 7 parts by mass, per 100 parts by mass of the rubber components.

Any type of vulcanization accelerator may be used, including those usually used. Examples of the vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Each of these may be used alone, or two or more of these may be used in combination. From the standpoint of the balance of the properties, sulfenamide or guanidine vulcanization accelerators are preferred among these.

In addition to the above-mentioned components, the rubber composition may appropriately contain compounding agents or materials commonly used in the tire industry such as release agents.

The rubber composition may be prepared by known methods. For example, it may be prepared by kneading the components using a rubber kneading machine such as an open roll mill or Banbury mixer, and vulcanizing the kneaded mixture.

The kneading conditions are as follows. In a base kneading step involving kneading additives other than vulcanizing agents and vulcanization accelerators, the kneading temperature is usually 50 to 200°C, preferably 80 to 190°C, and the kneading time is usually 30 seconds to 30 minutes, preferably one minute to 30 minutes. In a final kneading step involving kneading vulcanizing agents and vulcanization accelerators, the kneading temperature is usually 100°C or lower, preferably from room temperature to 80°C. The composition obtained after kneading vulcanizing agents and vulcanization accelerators is usually vulcanized by press vulcanization, for example. The vulcanization temperature is usually 120 to 200°C, preferably 140 to 180°C.

The rubber composition may be suitably used in a tire tread, particularly a tread (a monolayer tread, or a cap tread of a multilayer tread) of a studless winter tire that has a road-contacting surface with a large number of drainage micro grooves (sipes) having a depth and width each of about 100 μm.

(Tire)

The tires of the present invention can be produced from the above-described rubber composition by usual methods. Specifically, the unvulcanized rubber composition containing the above-mentioned components may be extruded into the shape of a tread (e.g., a cap tread) and assembled with other tire components in a tire building machine in a usual manner to build an unvulcanized tire, which may then be heated and pressurized in a vulcanizer to produce a tire. Such tires are suitable for use as studless winter tires for passenger vehicles.

The tread pattern of the tires is a groove pattern asymmetric in the tire width direction (asymmetric pattern) to contact the road. The asymmetric pattern, which is a tread pattern that is left-right asymmetric with respect to the equatorial plane, will be mounted on a vehicle in a specified direction. Examples of the asymmetric pattern include a pattern having a difference in negative ratio between the inner and outer sides in the vehicle mounting direction, and a pattern configured to differ in the number of circumferential grooves therebetween.

A known method for improving handling stability of a tire is to form a tire tread pattern that is asymmetric in the tread width direction to partially increase the stiffness of the blocks, thereby resulting in enhanced handling stability during steering. On icy roads, however, the intended effect cannot be obtained due to poor friction between the road and the rubber. In the present invention, water-soluble fine particles, for example, may be contained in a tread rubber so that the water-soluble fine particles may dissolve in water on the road surface during running to satisfy relationship (I) and increase the area occupied by depressions on the surface. Thus, the surface area of the tread portion may increase to ensure sufficient friction even on icy roads, thereby reducing sliding between the road and the rubber. It is also possible to enhance steering response by the effect of the asymmetric pattern.

EXAMPLES

The present invention will be specifically described with reference to, but not limited to, examples.

The chemicals used in examples and comparative examples are listed below.

Natural rubber (NR): RSS#3
Polybutadiene rubber (BR): BR150B from Ube Industries, Ltd. (cis content: 95% by mass or higher)
Carbon black: Seast N220 from Mitsubishi Chemical Corporation ($N_2SA$: 114 $m^2/g$)
Silica: Ultrasil VN3 from Evonik Degussa ($N_2SA$: 172 $m^2/g$)
Silane coupling agent: Si266 from Evonik Degussa
Water-soluble fine particle 1: sodium lignosulfonate from Nippon Paper Industries Co., Ltd. (median particle size (median size): 10 μm)
Water-soluble fine particle 2: potassium sulfate from Ueno Fine Chemicals Industry, Ltd. (median particle size (median size): 100 μm)
Water-soluble fine particle 3: MN-00 from Umai Chemical Co., Ltd. (magnesium sulfate, median particle size (median size): 75 μm)
Water-soluble fine particle 4: USN-00 from Umai Chemical Co., Ltd. (ultra fine particle magnesium sulfate, median particle size (median size): 3 μm)
Water-soluble fine particle 5: sodium lignosulfonate from Tokyo Chemical Industry Co., Ltd. (median particle size (median size): 100 μm)
Water-soluble fine particle 6: MG-OK (magnesium sulfate) from Ako Kasei Co., Ltd.
Water-soluble fine particle 7: KSO (potassium sulfate) from Ueno Fine Chemicals Industry, Ltd.
Wax: Ozoace wax from Nippon Seiro Co., Ltd.
Antioxidant: NOCRAC 6C from Ouchi Shinko Chemical Industrial Co., Ltd.
Oil: PS-32 (mineral oil) from Idemitsu Kosan Co., Ltd.
Stearic acid: Kiri from NOF Corporation
Zinc oxide: zinc oxide #2 from Mitsui Mining & Smelting Co., Ltd.
Sulfur: powdered sulfur from Tsurumi Chemical Industry Co., Ltd.
Vulcanization accelerator: NOCCELER NS from Ouchi Shinko Chemical Industrial Co., Ltd.

[Measurement of median particle size (median size) of water-soluble fine particle]

The median particle size was measured by laser diffraction using SALD-2000J available from Shimadzu Corporation (the following measurement procedure was used).

<Measurement procedure>

The water-soluble fine particles were dispersed in a solution mixture of a dispersion solvent (toluene) and a dispersant (a 10% by mass solution of sodium di(2-ethylhexyl) sulfosuccinate in toluene) at room temperature. The dispersion was stirred for five minutes under ultrasonic irradiation to prepare a test solution. The test solution was transferred to a batch cell, and one minute later the measurement was performed (refractive index: 1.70-0.20 i).

<Examples and Comparative Examples>

Using the recipe shown in each table, a 1.7 L Banbury mixer was charged with the natural rubber and silica and with the polybutadiene rubber and silica, and after each addition they were kneaded at 150°C for three minutes to give a kneaded mixture (masterbatch). To the masterbatch were added the materials other than the sulfur and vulcanization accelerator, and they were kneaded at 150°C for two minutes to give a kneaded mixture. Then, the sulfur and vulcanization accelerator were added, and they were kneaded using an open roll mill at 80°C for five minutes to obtain an unvulcanized rubber composition.

The unvulcanized rubber compositions prepared as above were each formed into the shape of a cap tread and assembled with other tire components, followed by vulcanization at 170°C for 15 minutes to prepare a test studless winter tire (tire size: 195/65R15).

The test studless winter tires prepared as above were evaluated as described below. The tables show the results. It should be noted that Comparative Examples 1-1 and 2-1 are used as standards of comparison in Tables 1 and 2, respectively.

A sample (vulcanized rubber composition (after vulcanization) having a size of 15 mm × 15 mm × 3 mm) was sampled as shown in Fig. 1. First, the tread interior surface (3 mm × 3 mm = 9 $mm^2$) of the sample (before immersion) was photographed with a microscope (Leica DMS1000 from Leica). Using the photograph, the area ($mm^2$) occupied by depressions on the tread interior surface was measured to calculate the percentage (Svb, %) of the area occupied by depressions on the tread interior surface before immersion.

Subsequently, the sample (before immersion) was entirely immersed for three hours in 1000 mL of water maintained at 25°C.

After the immersion, the sample was taken out and dried, and the tread interior surface (3 mm × 3 mm = 9 $mm^2$) of the sample (after immersion) was photographed similarly with the microscope. Using the photograph, the area ($mm^2$) occupied by depressions on the tread interior surface was measured to calculate the percentage (Sva, %) of the area occupied by depressions on the tread interior surface after immersion.

Then, the Sva (%) and Svb (%) were used to calculate the rate of change (ΔSv, %) in the area occupied by depressions on the tread interior surface before and after the immersion conditions.

<Viscoelastic testing>

The dynamic modulus (70°C E*, MPa) of the sample (vulcanized rubber composition (after vulcanization)) sampled as shown in Fig. 1 was measured using a viscoelastic spectrometer VES (Iwamoto Seisakusho Co., Ltd.) at a temperature of 70°C, a frequency of 10Hz, an initial strain of 10%, and a dynamic strain of 2%.

<Ice performance>

The test studless winter tires of each formulation example were evaluated for vehicle performance on ice under the following conditions. The test site was the Nayoro Tire Proving Ground of Sumitomo Rubber Industries, Ltd. in Hokkaido, Japan. The air temperature was -5 to 0°C. A set of the test tires were mounted on a front-engine, rear-wheel-drive car of 2000 cc displacement made in Japan. The distance required for the car traveling on ice to stop after the brakes that lock up were applied at 30 km/h was measured and expressed as an index relative to the standard comparative example using the equation below. A higher index indicates better snow and ice performance.

(Ice grip performance) = (Brake stopping distance of standard comparative example)/(Stopping distance of each formulation example) × 100

<Ice handling stability>

A set of the test studless winter tires were mounted on a front-engine, rear-wheel-drive car of 2000 cc displacement made in Japan. A test driver drove the car on an icy road at 15 km/h. Then, the driver compared and evaluated the stability of steering control. The results are expressed as an index relative to the standard comparative example. A higher index indicates better stability of grip performance on an icy road (ice handling stability).

<Dry handling stability>

A set of the test studless winter tires were mounted on a front-engine, rear-wheel-drive car of 2000 cc displacement made in Japan. A test driver drove the car 10 laps around a dry asphalt test track. Then, the driver compared and evaluated the stability of steering control during the lap with the best lap time and the final lap. The results

are expressed as an index relative to the standard comparative example. A higher index indicates better stability of grip performance on a dry road (dry handling stability).

[Table 1] (Note: Examples 1-5 to 1-9 are Reference Examples)

| | | Example | | | | | | | | | Comparative Example | |
|---|---|---|---|---|---|---|---|---|---|---|---|---|
| | | 1-1 | 1-2 | 1-3 | 1-4 | 1-5 | 1-6 | 1-7 | 1-8 | 1-9 | 1-1 | 1-2 |
| Amount (parts by mass) | NR | 50 | 50 | 50 | 50 | 50 | 50 | 50 | 50 | 50 | 50 | 50 |
| | BR | 50 | 50 | 50 | 50 | 50 | 50 | 50 | 50 | 50 | 50 | 50 |
| | Carbon black | 5 | 5 | 5 | 5 | 5 | 5 | 5 | 5 | 5 | 5 | 5 |
| | Silica | 65 | 65 | 65 | 65 | 65 | 65 | 65 | 65 | 65 | 65 | 65 |
| | Silane coupling agent | 8 | 8 | 8 | 8 | 8 | 8 | 8 | 8 | 8 | 8 | 8 |
| | Water-soluble fine particle 1 | 7 | 30 | – | – | – | – | – | – | – | – | 3 |
| | Water-soluble fine particle 2 | – | – | 30 | 40 | – | – | – | – | – | – | – |
| | Water-soluble fine particle 3 | – | – | – | – | 20 | – | – | – | – | – | – |
| | Water-soluble fine particle 4 | – | – | – | – | – | 20 | – | – | – | – | – |
| | Water-soluble fine particle 5 | – | – | – | – | – | – | 20 | – | – | – | – |
| | Water-soluble fine particle 6 | – | – | – | – | – | – | – | 20 | – | – | – |
| | Water-soluble fine particle 7 | – | – | – | – | – | – | – | – | 20 | – | – |
| | Wax | 1 | 1 | 1 | 1 | 1 | 1 | 1 | 1 | 1 | 1 | 1 |
| | Antioxidant | 2 | 2 | 2 | 2 | 2 | 2 | 2 | 2 | 2 | 2 | 2 |
| | Mineral oil | 15 | 25 | 25 | 30 | 25 | 25 | 25 | 25 | 25 | 15 | 15 |
| | Stearic acid | 1 | 1 | 1 | 1 | 1 | 1 | 1 | 1 | 1 | 1 | 1 |
| | Zinc oxide | 2 | 2 | 2 | 2 | 2 | 2 | 2 | 2 | 2 | 2 | 2 |
| | Sulfur | 1 | 1 | 1 | 1 | 1 | 1 | 1 | 1 | 1 | 1 | 1 |
| | Vulcanization accelerator | 2 | 2 | 2 | 2 | 2 | 2 | 2 | 2 | 2 | 2 | 2 |
| Tread pattern | | Asymmetry | Asymmetry | Asymmetry | Asymmetry | Symmetry | Symmetry | Symmetry | Symmetry | Symmetry | Asymmetry | Asymmetry |
| Evaluation | Percentage (Svb, %) of area occupied by depressions on tread interior surface before immersion | 0 | 0 | 0 | 0 | 0 | 0 | 0 | 0 | 0 | 0 | 0 |
| | Percentage (Sva, %) of area occupied by depressions on tread interior surface after immersion | 5 | 20 | 35 | 50 | 16 | 12 | 22 | 20 | 25 | 0 | 2 |
| | Rate of change (ΔSv, %) in area occupied by depressions on tread interior surface before and after immersion conditions | 5 | 20 | 35 | 50 | 16 | 12 | 22 | 20 | 25 | 0 | 2 |
| | 70°CE* (Mpa) | 3.7 | 4.1 | 3.8 | 4.3 | 3.0 | 3.6 | 3.2 | 3.3 | 3.5 | 3.5 | 3.7 |
| | Ic performance | 104 | 110 | 115 | 122 | 108 | 106 | 111 | 110 | 112 | 100 | 101 |
| | Ice handling stability | 105 | 106 | 108 | 110 | 102 | 101 | 103 | 102 | 102 | 100 | 100 |
| | Dry handling stability | 100 | 103 | 100 | 105 | 100 | 102 | 100 | 100 | 102 | 100 | 100 |

[Table 2]

| | | Example | | | | Comparative Example | |
|---|---|---|---|---|---|---|---|
| | | 2-1 | 2-2 | 2-3 | 2-4 | 2-1 | 2-2 |
| Amount (parts by mass) | NR | 30 | 30 | 30 | 30 | 30 | 30 |
| | BR | 70 | 70 | 70 | 70 | 70 | 70 |
| | Carbon black | 7 | 7 | 7 | 7 | 7 | 7 |
| | Silica | 60 | 60 | 60 | 60 | 60 | 60 |
| | Silane coupling agent | 7 | 7 | 7 | 7 | 7 | 7 |
| | Water-soluble fine particle 1 | 7 | 30 | — | — | — | 3 |
| | Water-soluble fine particle 2 | — | — | 30 | 40 | — | — |
| | Wax | 1 | 1 | 1 | 1 | 1 | 1 |
| | Antioxidant | 2 | 2 | 2 | 2 | 2 | 2 |
| | Mineral oil | 15 | 25 | 25 | 30 | 15 | 15 |
| | Stearic acid | 1 | 1 | 1 | 1 | 1 | 1 |
| | Zinc oxide | 2 | 2 | 2 | 2 | 2 | 2 |
| | Sulfur | 1 | 1 | 1 | 1 | 1 | 1 |
| | Vulcanization accelerator | 2 | 2 | 2 | 2 | 2 | 2 |
| Tread pattern | | Asymmetry | Asymmetry | Asymmetry | Asymmetry | Asymmetry | Asymmetry |
| Evaluation | Percentage (Svb, %) of area occupied by depressions on tread interior surface before immersion | 0 | 0 | 0 | 0 | 0 | 0 |
| | Percentage (Sva, %) of area occupied by depressions on tread interior surface after immersion | 5 | 22 | 36 | 48 | 0 | 2 |
| | Rate of change (ΔSv, %) in area occupied by depressions on tread interior surface before and after immersion conditions | 5 | 22 | 36 | 48 | 0 | 2 |
| | 70°CE* (Mpa) | 3.3 | 3.7 | 3.4 | 3.9 | 3.2 | 3.3 |
| | Ice performance | 105 | 111 | 116 | 120 | 100 | 101 |
| | Ice handling stability | 106 | 108 | 110 | 112 | 100 | 100 |
| | Dry handling stability | 100 | 102 | 103 | 103 | 100 | 100 |

As shown in the tables, the examples satisfying relationship (I) with respect to the rate of change (ΔSv) in the area occupied by depressions on the tread interior surface exhibited improved snow and ice performance while maintaining good dry handling stability, thereby resulting in a significantly improved balance of these properties. They also achieved good handling stability on snow and ice. Moreover, it is also demonstrated that the tires with an asymmetric tread pattern had better overall performance in terms of snow and ice performance and dry handling stability (the sum of the indices of ice performance and dry handling stability) and in terms of snow and ice performance, dry handling stability, and handling stability on snow and ice (the sum of the indices of ice performance, dry handling stability, and ice handling stability) than the (reference) tires with a symmetric tread pattern.

## Claims

1. A tire, comprising a vulcanized rubber composition which satisfies the relationship (I): ΔSv ≥ 5% when it is sampled inward in a tire radial direction from a tread interior surface exposed by removing a tread surface to a depth of 3 mm inward in the tire radial direction, wherein ΔSv represents a rate of change in an area occupied by depressions on the tread interior surface before and after immersion under the following conditions,

   the tire comprising a tread comprising the vulcanized rubber composition,
   wherein the vulcanized rubber composition is prepared from a tread rubber composition comprising at least one

rubber component and water-soluble fine particles, the median particle size D50 of the water-soluble fine particles is 1 μm to 100 μm and the amount of the water-soluble fine particles per 100 parts of the rubber components is 5 parts by mass or more,
the vulcanized rubber composition has a complex modulus at 70°C (70°C E*) satisfying the relationship (II): 70°C E* ≥ 2.5 MPa, and
the tread having a groove pattern asymmetric in a tire width direction to contact a road:
(Immersion conditions)
The vulcanized rubber composition is entirely immersed for three hours in 1000 mL of water maintained at 25°C.

**2.** The tire according to claim 1,
wherein the median particle size D50 of the water-soluble fine particles is 10 μm to 100 μm.

**3.** The tire according to claim 1 or 2, which is a studless winter tire.

## Patentansprüche

**1.** Reifen, umfassend eine vulkanisierte Kautschukzusammensetzung, die die Beziehung (I) erfüllt: ΔSv ≥ 5 %, wenn sie in einer radialen Richtung des Reifens von einer Laufflächeninnenfläche, die durch Entfernen einer Laufflächenoberfläche bis zu einer Tiefe von 3 mm in der radialen Richtung des Reifens freigelegt wird, nach innen bestimmt wird, wobei ΔSv eine Änderungsrate in einem Bereich darstellt, der von Vertiefungen auf der Laufflächeninnenfläche vor und nach dem Eintauchen unter den folgenden Bedingungen eingenommen wird,

wobei der Reifen eine Lauffläche umfasst, die die vulkanisierte Kautschukzusammensetzung umfasst,
wobei die vulkanisierte Kautschukzusammensetzung aus einer Laufflächenkautschukzusammensetzung hergestellt ist, die mindestens eine Kautschukkomponente und wasserlösliche Feinteilchen umfasst, die mittlere Teilchengröße D50 der wasserlöslichen Feinteilchen 1 μm bis 100 μm beträgt und die Menge der wasserlöslichen Feinteilchen pro 100 Teile der Kautschukkomponenten 5 Massenteile oder mehr beträgt,
die vulkanisierte Kautschukzusammensetzung einen komplexen Modul bei 70 °C (70 °C E*) aufweist, der die Beziehung (II) erfüllt:

$$70\ °C\ E^* \geq 2{,}5\ MPa,$$

und
die Lauffläche ein in Richtung der Reifenbreite asymmetrisches Rillenmuster aufweist, um mit einer Straße in Kontakt zu kommen:
(Eintauchbedingungen)
Die vulkanisierte Gummizusammensetzung wird drei Stunden lang vollständig in 1000 ml Wasser eingetaucht, das auf 25 °C gehalten wird.

**2.** Reifen nach Anspruch 1,
wobei die mittlere Teilchengröße D50 der wasserlöslichen Feinteilchen 10 μm bis 100 μm beträgt.

**3.** Reifen nach Anspruch 1 oder 2, der ein spikeloser Winterreifen ist.

## Revendications

**1.** Pneu, comprenant une composition de caoutchouc vulcanisé qui satisfait à la relation (I) : ΔSv ≥ 5 % lorsqu'il est prélevé vers l'intérieur dans une direction radiale du pneu d'une surface intérieure de la bande de roulement exposée par l'enlèvement d'une surface de la bande de roulement à une profondeur de 3 mm vers l'intérieur dans la direction radiale du pneu, dans lequel ΔSv représente un taux de changement dans une zone occupée par des dépressions sur la surface intérieure de la bande de roulement avant et après l'immersion dans les conditions suivantes,

le pneu comprenant une bande de roulement comprenant la composition de caoutchouc vulcanisée,
dans lequel la composition de caoutchouc vulcanisée est préparée à partir d'une composition de caoutchouc de bande de roulement comprenant au moins un composant de caoutchouc et des particules fines solubles dans l'eau, la taille médiane des particules D50 des particules fines solubles dans l'eau est de 1 μm à 100 μm et la

quantité de particules fines solubles dans l'eau pour 100 parties des composants de caoutchouc est de 5 parties en masse ou plus,
la composition de caoutchouc vulcanisée a un module complexe à 70°C (70°C E*) satisfaisant à la relation (II) : 70°C E* $\geq$ 2,5 MPa, et
la bande de roulement ayant un motif de rainure asymétrique dans une direction de largeur du pneu pour entrer en contact avec la route :
(Conditions d'immersion)
La composition de caoutchouc vulcanisée est entièrement immergée pendant trois heures dans 1 000 ml d'eau maintenue à 25°C.

**2.** Pneu selon la revendication 1,
dans lequel la taille médiane des particules D50 des particules fines solubles dans l'eau est de 10 $\mu$m à 100 $\mu$m.

**3.** Pneu selon la revendication 1 ou 2, qui est un pneu d'hiver sans crampons.

FIG.1

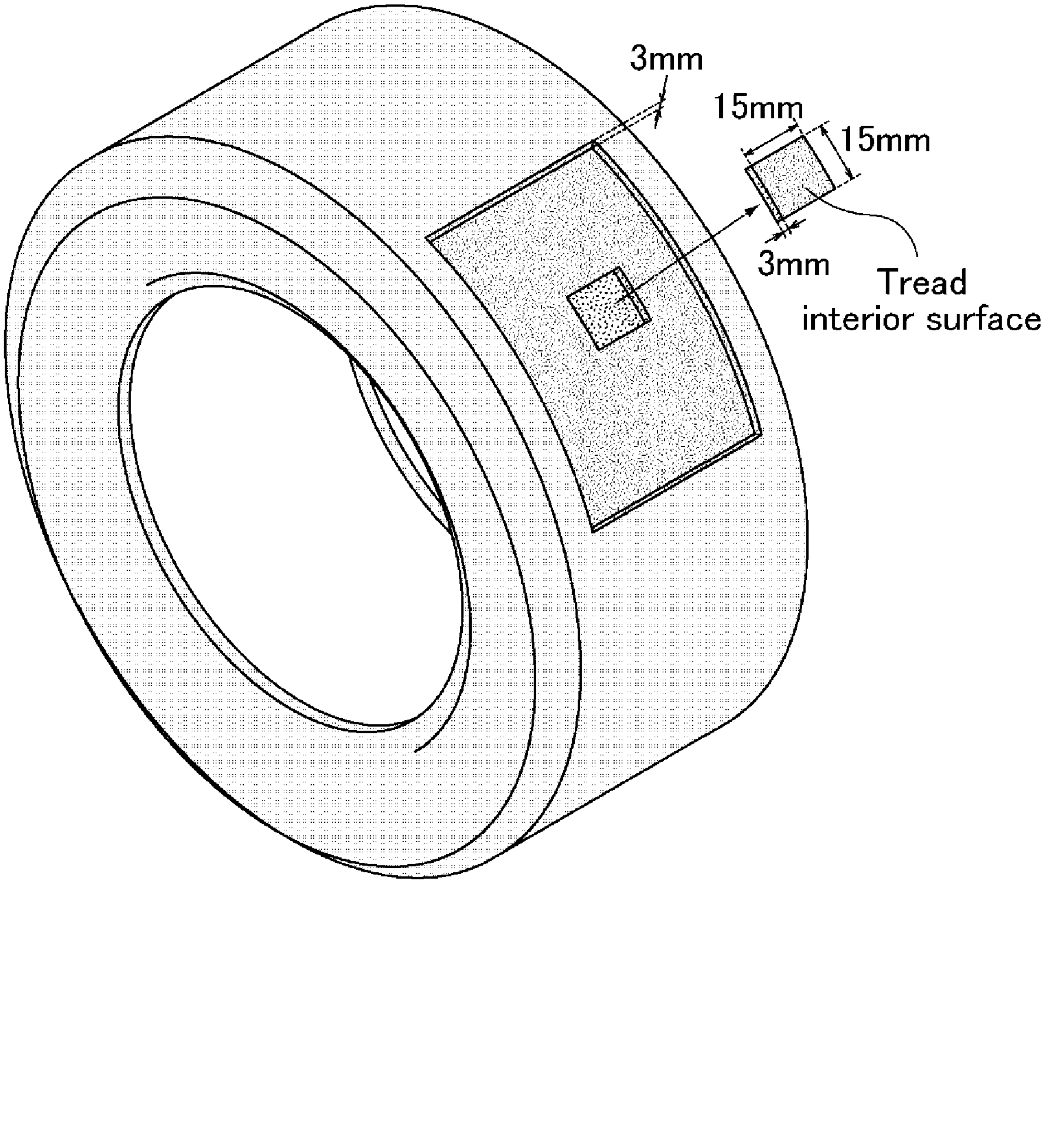

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009091482 A
- WO 2018173870 A1
- JP 2008308615 A
- JP 2013514399 A
- WO 2017104781 A1
- JP H03266706 A
- EP 2655089 A1
- FR 2966157 A1
- US 4414370 A
- JP S596207 A
- JP H558005 B
- JP H1313522 A
- US 5010166 A

### Non-patent literature cited in the description

- annual research report TREND 2000. Toagosei Co., Ltd., vol. 3, 42-45